# EUROPÄISCHE PATENTANMELDUNG

(11) **EP 2 145 670 A1**
(43) Veröffentlichungstag der Anmeldung: **20.01.2010**
(21) Anmeldenummer: 09008866.7
(22) Anmeldetag: 07.07.2009
(51) Int. Cl.: B01D 53/50, B01D 53/62

(54) **Verfahren zur Verbrennung eines kohlenstoffhaltigen Brennstoffs, insbesondere fossilen Brennstoffs**

(30) Priorität: 09.07.2008 DE 102008032355
(71) Anmelder: FISIA Babcock Environment GmbH, 51643 Gummersbach (DE)
(72) Erfinder: Dreuscher, Helmut, 51674 Wiehl (DE); Epple, Bernd, 64395 Brensbach (DE); Priesmeier, Ulrich, 51643 Gummersbach (DE); Tschaffon, Helmut, 85716 Unterschleißheim (DE)
(74) Vertreter: Carstens, Wilhelm

(57) **Zusammenfassung**

Bei einem Verfahren zur Verbrennung eines kohlenstoffhaltigen Brennstoffs, insbesondere eines fossilen Brennstoffs, bei dem das Rauchgas zumindest entstaubt, mit einem Calciumverbindungen enthaltenden Absorbens entschwefelt und in einem zweistufigen Hochtemperaturprozess mittels Calciumoxid unter Bildung von Calciumcarbonat in einem Carbonator entcarbonisiert wird und das Calciumcarbonat in einem Calcinator unter Zufuhr von Wärme und unter Freisetzung von Kohlendioxid zu Calxiumoxid regeneriert wird, das in den Carbonator zurückgeführt wird, wobei mindestens einer der Stufen des Hochtemperatur - Prozesses frisches calciumhaltiges Absorbens zugesetzt wird, ist zur Angabe eines optimalen Einsatzes für das abgezogenen Materials vorgesehen, dass Calciumverbindungen aus dem Carbonator und /oder Calcinator als Absorbens bei der Rauchgasentschwefelung eingesetzt werden.

## Beschreibung

Die Erfindung betrifft ein Verfahren zur Verbrennung eines kohlenstoffhaltigen Brennstoffs, insbesondere von fossilen Brennstoffen, weiter bevorzugt Kohle, bei dem das Rauchgas zumindest entstaubt, mit einem Calciumverbindungen enthaltenden Absorbens entschwefelt und in einem zweistufigen Hochtemperaturprozess mittels Calciumoxid unter Bildung von Calciumcarbonat in einem Carbonator entcarbonisiert wird und das Calciumcarbonat in einem Calcinator unter Zufuhr von Wärme und unter Freisetzung von Kohlendioxid zu Calxiumoxid regeneriert wird, das in den Carbonator zurückgeführt wird, wobei mindestens einer der Stufen des Hochtemperatur - Prozesses frisches calciumhaltiges Absorbens zugesetzt wird.

Für die Entschwefelung von Rauchgasen (Verbrennungsgasen), die mit trockenen, halbtrockenen oder nassen Verfahren betrieben werden kann, werden üblicherweise Calciumverbindungen als Absorbentien eingesetzt. Bei allen Verfahren werden die Calciumverbindungen entweder als trockener Feststoff oder als Suspension intensiv mit dem Rauchgas enthaltenen S02 und den gegebenenfalls noch im Rauchgas enthaltenen Schadgasen (SO3, HCl, HF) in Kontakt gebracht. Durch die Aufnahme von S02 entsteht zunächst ein Calciumsulfit, welches nachfolgend verfahrensabhängig unter Aufnahme von Sauerstoff zu Calciumsulfat oxidiert wird.

Als frisches Absorbens wird dem Entschwefelungsprozeß üblicherweise fein gemahlener Kalkstein(CaCO3), Kalkhydrat(Ca(OH2)) oder Branntkalk (Ca0) zugeführt. Als Endprodukt entsteht entweder ein zu deponierendes Gemisch aus Calciumsulfit und Calciumsulfat oder im Falle einer Nassrauchgasentschwefelung Gips (CaSO4 * 2H2O - Calciumsulfat - Dihydrat), der in der Baustoffindustrie eingesetzt werden kann.

Neben der Entstaubung, Entschwefelung und Entcarbonisierung kann auch noch eine Entstickung vorgesehen sein.

Um den Problemen des Klimawandels Rechnung zu tragen, ist als Ergänzung der bisherigen Rauchgasreinigung für zukünftige Großfeuerungsanlagen (wie z. B. Kraftwerken) auch eine CO2 - Abtrennung (Entcarbonisierung) vorgesehen. Bei dem so genannten Carbonate Looping erfolgt die CO2 - Abscheidung in einer ersten Hochtemperaturprozess - Stufe, in der körniger Branntkalk (CaO) mit einer Korngröße bis zu mehreren Millimetern eingesetzt wird. In einem Carbonator reagiert das CaO durch Aufnahme von CO2 exotherm zu Kalkstein (Calciumcarbonat). Der Kalkstein wird dann unter Zufuhr von Wärme in einer weiteren endothermen Hochtemperaturprozess - Stufe in einem Calcinator zu CaO regeneriert, d.h. calciniert, wobei weitgehend reines CO2 abgespalten bzw. desorbiert wird. Die Zufuhr von Wärme kann durch Wärmetausch oder durch Zufuhr von Kohle und Sauerstoff erfolgen, durch deren Reaktion die Wärme bereitgestellt wird. Das CaO wird in die erste Hochtemperaturprozess - Stufe zurückgeführt. Bei Einsatz von Kalkstein (CaCO3) für die CO2 - Abscheidung tritt eine fortschreitende Deaktivierung des CaO mit der Anzahl von Zyklen auf, so dass frisches CaCO3 zugesetzt und deaktiviertes Material aus dem Prozeß abgezogen werden muss (Vgl. http://www.est.tu-darmstadt.de/Carb-Loop.pdf - Aufsatz :"CARBONATE LOOPING ZUR CO2-ABSCHEIDUNG" vom 20.04.2007). Es ist davon auszugehen, dass das CaO durch die mehrfache Beladung mit CO2 und die anschließende Regeneration seine Kornstruktur ändert. Einerseits bilden sich Poren, die zu einer erhöhten Reaktivität des Materials führen, andererseits reagiert das Material teilweise mit dem auch nach der Entschwefelung vorhandenen Rest - S02 im Rauchgas zu Calciumsulfit/sulfat. Das Calciumsulfat ist dabei so stabil, dass es bei der thermischen Regeneration nicht zerfällt, sondern eine stabile Hülle bildet, welche die Reaktivität des Korns beeinträchtigt.

Es ist bekannt, dass das abgezogene Material in der Zementindustrie eingesetzt werden kann.

Aus der US 6,737,031 B2 ist ein Verfahren zur gleichzeitigen Reduktion der CO2 - und der SO2 - Emission in einer Verbrennungsanlage bekannt, bei dem in die Feuerung ein calciumhaltiges Absorbens eingebracht wird, von dem ein Teil nach seiner Decarbonisierung S02 absorbiert. Die aus der Feuerung austretenden Rauchgase werden einer Zwischenkühlung unterzogen und treten in einen ersten Reaktor ein. Hier kann der im Rauchgas enthaltene Anteil des Absorbens, der nicht mit S02 reagiert hat, CO2 aus dem Rauchgas durch Carbonisierung einfangen. Danach werden die im Rauchgas enthaltenen Feststoffe in einem Abscheider abgetrennt, damit die Feststoffe in einem zweiten Reaktor einer Wärmebehandlung unterzogen werden können, um aus ihnen durch Decarbonisierung CO2 zu extrahieren. Das entstehende regenerierte CO2 - Absorbens wird zum ersten Reaktor rezirkuliert. Bei der Decarbonisierung wird auch das in der Feuerung eingebundene S02 freigesetzt. S02 und CO2 können von einander getrennt werden. Bei diesem Verfahren erfolgt die Entschwefelung in der Feuerung selbst. Es ist also insbesondere nicht für Nachrüstung bei bestehenden Kraftwerken mit nachgeschalteter Entschwefelung einsetzbar.

Es ist die Aufgabe der vorliegenden Erfindung, einen optimaleren Einsatz für das abgezogene Material anzugeben.

Diese Aufgabe wird dadurch gelöst, dass Calciumverbindungen aus dem Carbonator und / oder Calcinator als Absorbens bei der Rauchgasentschwefelung eingesetzt werden. Als Entschwefelungsverfahren kann ein beliebiges der Verfahren eingesetzt werden, wie sie auf S. 1, 2.Abs. beschrieben sind.

Das für die CO2 - Abscheidung eingesetzte CaCO3 wird also mit großem Vorteil für den Gesamtprozess auch für die Entschwefelung eingesetzt. Es kann zumindest einen Teil des sonst bei der Entschwefelung eingesetzten Absorbens ersetzen.

Vorzugsweise erfolgt der Einsatz bei einer nassen Rauchgasentschwefelungsanlage.

In dem Carbonate - Looping-Prozess wird das eingesetzte körnige Material mechanisch beansprucht und unterliegt damit einem Abrieb erzeugenden Verschleiß. Der Verschleiß wird durch den Transport vom Carbonator zum Calcinator und zurück verursacht. Weiterer Verschleiß ergibt sich durch die bevorzugte Auslegung von Carbonator und Calcinator als Wirbelbetten. Der Abrieb stammt vorwiegend typischer Weise aus dem äußeren Bereich des Korns und enthält Calciumsulfat, Calciumoxid und/oder Calciumcarbonat. Im Vergleich zum Restkorn weist der Abrieb ein im Wesentlichen feineres Kornspektrum auf. Außerdem können die Körner bei Beanspruchung zerfallen. Erfindungsgemäß werden die Zerfallsteilchen dem Abrieb zugerechnet.

Grundsätzlich stehen somit vier verschieden Qualitäten als Absorbens - Material für die Entschwefelung zur Verfügung:
Grobkorn-Material aus dem Calcinator,
Abrieb aus dem Calcinator,
Grobkorn-Material aus dem Carbonator und
Abrieb aus dem Carbonator.

Jede der genannten Qualitäten kann alleine oder in Kombination mit anderen zur Rauchgasentschwefelung eingesetzt werden.

Vorzugsweise werden die Prozesse der CO2-Abtrennung und/oder der Regeneration so geführt, dass der Abrieb vom Restkorn getrennt wird und somit Abrieb aus dem Carbonator und/oder Abrieb aus dem Calcinator als Absorbens eingesetzt werden kann. Die Feinheit des Abriebs ist dabei von Vorteil, weil dadurch die Reaktivität des Absorbens für die SO2 - Abscheidung deutlich verbessert wird.

Das Material hat aufgrund der künstlichen Porosität und seinen Anteil an CaO eine höhere Reaktivität als der für die CO2 - Abscheidung eingesetzte Kalkstein.

Die Calciumsulfatanteile im Abrieb sind hinsichtlich der S02- Abscheidung inert; sie wirken aber bei einer nassen Rauchgasentschwefelung als Kristallisationskeim bei der Bildung von Gipskristallen. Dadurch wird die Abscheideleistung der Nassentschwefelung gesteigert.

Es ist aber auch denkbar, dass Grobkorn aus dem Carbonator und /oder aus dem Calcinator als Absorbens eingesetzt wird.

Zum Ersatz des aus dem Carbonate - Looping - Prozesses wegen Aktivitätsverlusts abzuziehenden Materials wird vorzugsweise aus natürlichen Quellen stammendes CaC 03 als frisches Absorbens dem Calcinator direkt zugeführt. Es aber ebenso möglich, das frische Absorbens an einer anderen Stelle zum umlaufenden Absorbens des Carbonate - Looping - Prozesses direkt oder indirekt (z. B. durch den Rauchgasstrom) zuzuspeisen. Weiterhin ist es selbstverständlich möglich, dass andere calciumhaltige Materialien, insbesondere CaO, anstelle oder in Kombination mit CaCO3 aus natürlichen Quellen als frisches Absorbens zugespeist werden.

Falls die Menge der aus dem Carbonator und / oder dem Calcinator abgezogenen Materials für die Rauchgasentschwefelung nicht ausreicht, wird vorzugsweise der Entschwefelung CaCO3 und / oder CaO als frisches Absorbens zugesetzt.

Weiterhin ist es von Vorteil, wenn bei einer Aufarbeitung des freigesetzten Kohlendioxids anfallendes Abwasser der Rauchgasentschwefelung zugeleitet wird.

Die Erfindung richtet sich auch auf die Verwendung von Calciumverbindungen, die zuvor an einem Hochtemperaturprozess zur Entcarbonisierung von Rauchgas teilgenommen haben, als Absorbens in einem Verfahren zur Entschwefelung von Rauchgas, insbesondere in einer nassen Rauchgasentschwefelungsanlage.

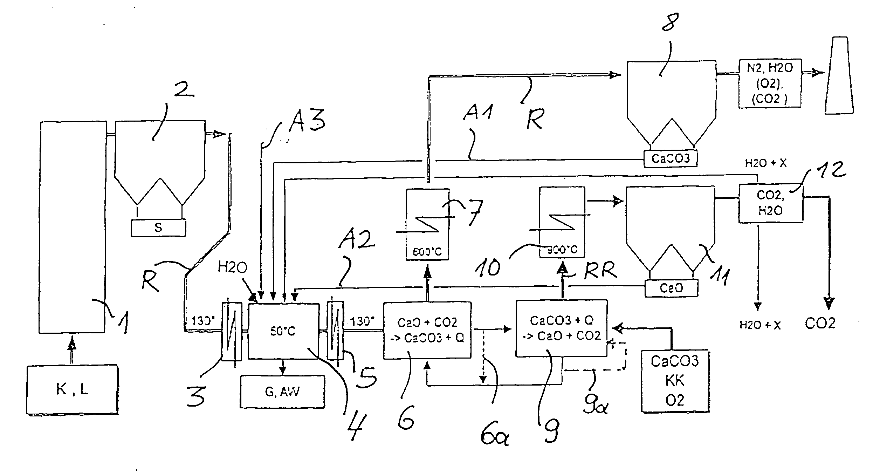

Die Erfindung soll nun anhand der beigefügten Figur an einem Beispiel beschrieben werden, wobei der Entschwefelung und dem Calcinator frisches Absorbens zu geführt wird.

Dem Kessel 1 eines Kraftwerks werden Kohle K and Luft L zugeführt. Das aus dem Kessel 1 abgezogene Rauchgas R wird in einem Elektrofilter 2 bei 130° C entstaubt und der Staub S wird abgezogen. Das entstaubte Rauchgas R wird in einem Wärmetauscher 3 gekühlt und in eine Nassrauchgasentschwefelungsanlage 4 geleitet.

Der Rauchgasentschwefelungsanlage 4 wird Wasser H2O, sowie ein Absorbens A1 (CaCO3)und / oder ein Absorbens A2 (CaO) zugeführt. Aus diesen wird eine Suspension erstellt, die der Umlaufsuspension der Anlage zugemischt und zusammen mit dieser in das Rauchgas R eingesprüht wird. Ein Teil des Wassers verdampft bzw. verdunstet und senkt dabei die Rauchgastemperatur auf Sättigungstemperatur (ca.50°C) ab. Bei dieser Temperatur laufen die folgenden Brutto - Entschwefelungsreaktionen ab:

CaCO3 + S02 + 0,5 02 + 2 H2O --->CaSO4 x 2 H2O + CO2 (1a)

bzw.

CaO + S02 + ½ 02 + 2 H2O ----> CaSO4 x 2 H2O (1b)

Aus der Rauchgasentschwefelungsanlage werden Gips G (CaSO4 x 2 H2O) und Abwasser AW abgezogen.

Das aus der Rauchgasentschwefelungsanlage 4 abgezogene Rauchgas wird in einem weiteren Wärmetauscher 5 auf wieder 130°c erwärmt. Der Wärmetauscher 3 und der Wärmetauscher 5 sind Teil eines Wärmeverschiebesystems oder bilden zusammen einen Gas- Gas- Wärmetauscher.

Danach tritt das Rauchgas in einen Carbonator 6 ein. Hier läuft eine exotherme Hochtemperaturprozess - Stufe ab, durch die sich das Rauchgas aufheizt:

CaO + CO2 ---> CaCO3 + Q (2)

Das Rauchgas R wird mit einer Temperatur im Bereich von 45°C - 750°C, vorzugsweise 600°C - 650°C, weiter bevorzugt von 600°C aus dem Carbonator über einen Wärmetauscher 7 abgezogen. Der im Rauchgas enthaltene Abrieb wird in einem Abscheider 8 abgeschieden und besteht im wesentlichern aus CaCO3. Der abgeschiedene Abrieb wird als Absorbens A1 der Rauchgasentschwefelungsanlage 4 zugeführt. Das den Abscheider 8 verlassende Rauchgas R besteht im Wesentlichen aus N2 und H2O mit kleinen Resten an 02 und CO2 und wird dem Kraftwerkskamin zugeführt.

Das im Carbonator 6 entstandene CaCO3 wird abgezogen und einem Calcinator 9 zugeführt. In dem Calcinator wird das CaCO3 unter Zufuhr von Wärme gemäß folgender Gleichung in einer zweiten Hochtemperaturprozess - Stufe regeneriert:

CaCO3 + Q ---> CaO + CO2 (3)

Dieser Prozess ist endotherm. Zur Erzeugung der für den endothermen Prozess im Calcinator 9 erforderlichen Wärme werden dem Calcinator 8 Kohle KK und Sauerstoff 02 zugeführt. Andere fossile Brennstoffe, aber auch Biomasse sind denkbar.

Carbonator 6 und Calcinator 9 sind vorzugsweise als Wirbelbetten ausgelegt. Weiter bevorzugt wird der Carbonator 6 als zirkulierende Wirbelschicht mit einer in der Figur gestrichelt dargestellten Rückführleitung 6a ausgebildet.

Es kann auch vorteilhaft sein, wenn der Calcinator 9 als zirkulierende Wirbelschicht mit einer in der Figur gestrichelt dargestellten Rückführleitung 9a ausgebildet wird.

Dem Calcinator wird auch das für den Ausgleich des abgezogenen Materials erforderliche körnige CaC03 zugeführt.

Das mit einer Temperatur von 900°C abgezogene und den Abrieb aus dem Calcinator 9 enthaltende Rauchgas RR wird durch einen Wärmtauscher 10 geführt und einem Abscheider 11 zugeführt. Das den Abscheider 11 verlassende Rauchgas RR enthält das im Calcinator desorbierte CO2 und H2O. In einer Trennstufe 12 kann Wasser H2O als Abwasser H2O + X vom CO2 abgetrennt werden. X bezeichnet etwaige Schadstoffe, die bei der Verbrennung der Kohle KK freigesetzt werden und nicht als Verunreinigungen an das CaO gebunden sind. Sie werden in der Trennstufe 12 abgeschieden (Kondensation) und der Nassentschwefelungsanlage 4 zur stofflichen Nutzung bzw. Entsorgung zugeleitet. In der Figur ist angedeutet, dass auch ein anderer Abzug des H2O + X möglich ist,

Das CO2 kann komprimiert und z.B. untertage gelagert werden.

Der im Rauchgas RR enthaltene Abrieb wird in dem Abscheider 11 abgeschieden und besteht im Wesentlichen aus CaO. Der abgeschiedene Abrieb wird als Absorbens A2 der Rauchgasentschwefelungsanlage 4 zu geführt. Die im Absorbens A2 enthaltenen Flugascheteilchen aus der Verbrennung der Kohle KK im Calcinator 9 beeinflussen die Qualität des aus der Rauchgasentschwefelungsanlage 4 abgezogenen Gips G nur unwesentlich.

Falls die Mengen an anfallendem Absorbens A1 und/oder A2 nicht ausreichend sind, wird der Rauchgasentschwefelungsanlage 4 zusätzlich frisches Absorbens A3 zugeführt (CaC03; CaO).

Die in den Wärmetauschern 7 und 10 gewonnene Wärme kann vorzugsweise in den Wasser - Dampf - Kreislauf des Kraftwerks eingebracht werden.

Falls nicht alles aus dem Branntkalk - Kalkstein - Zyklus abzuziehende Material in der Rauchgasentschwefelung des Kraftwerks verwendet werden kann, muss das Material anderweitig entsorgt werden. Es kann z. B. auch zur Entschwefelung an anderer Stelle eingesetzt oder in der Baustoffindustrie verwendet werden.

### Bezugszeichenliste

1 Kessel
2 Elektrofilter
3 Wärmetauscher
4 nasse Rauchgasentschwefelungsanlage
5 Wärmetauscher
6 Carbonator
6a Rückführleitung
7 Wärmetauscher
8 Abscheider
9 Calcinator
9a Rückführleitung
10 Wärmetauscher
11 Abscheider
12 Trennstufe
A1 Absorbens
A2 Absorbens
A3 frisches Absorbens
AW Abwasser
G Gips
K Kohle
KK Kohle
L Luft
R Rauchgas
RR Rauchgas aus Calcinator 9
S Staub
X Schadstoffe

## Patentansprüche

1. Verfahren zur Verbrennung eines kohlenstoffhaltigen Brennstoffs, insbesondere eines fossilen Brennstoffs,
bei dem das Rauchgas zumindest entstaubt, mit einem Calciumverbindungen enthaltenden Absorbens entschwefelt und in einem zweistufigen Hochtemperaturprozess mittels Calciumoxid unter Bildung von Calciumcarbonat in einem Carbonator entcarbonisiert wird und das Calciumcarbonat in einem Calcinator unter Zufuhr von Wärme und unter Freisetzung von Kohlendioxid zu Caliumoxid regeneriert wird, das in den Carbonator zurückgeführt wird, wobei mindestens einer der Stufen des Hochtemperatur - Prozesses frisches calciumhaltiges Absorbens zugesetzt wird,
**dadurch gekennzeichnet,**
**dass** Calciumverbindungen aus dem Carbonator und / oder Calcinator als Absorbens bei der Rauchgasentschwefelung eingesetzt werden.

2. Verfahren nach Anspruch 1,
**dadurch gekennzeichnet,**
**dass** Abrieb aus dem Carbonator als Absorbens eingesetzt wird.

3. Verfahren nach Anspruch 1 oder 2,
**dadurch gekennzeichnet,**
**dass** Abrieb aus dem Calcinator als Absorbens eingesetzt wird.

4. Verfahren nach einem der Ansprüche 1 bis 3,
**dadurch gekennzeichnet,**
**dass** Grobkorn aus dem Carbonator als Absorbens eingesetzt wird.

5. Verfahren nach einem der Ansprüche 1 bis 4,
**dadurch gekennzeichnet,**
**dass** Grobkorn aus dem Calcinator als Absorbens eingesetzt wird.

6. Verfahren nach einem der Ansprüche 1 bis 5,
**dadurch gekennzeichnet,**
**dass** der Entschwefelung CaCO3 und / oder CaO als frisches Absorbens zugesetzt wird.

7. Verfahren nach einem der Ansprüche 1 bis 6,
**dadurch gekennzeichnet,**
**dass** bei einer Aufarbeitung des freigesetzten Kohlendioxids anfallendes Abwasser der Rauchgasentschwefelung zugeleitet wird.

8. Verfahren nach einem der Ansprüche 1 bis 7,
**dadurch gekennzeichnet,**
**dass** das Rauchgas zunächst entschwefelt und anschließend entcarbonisiert wird.

9. Verwendung von Calciumverbindungen, die zuvor an einem Hochtemperaturprozess zur Entcarbonisierung von Rauchgas teilgenommen haben, als Absorbens in einem Verfahren zur Entschwefelung von Rauchgas, insbesondere in einer nassen Rauchgasentschwefelungsanlage.
